# EUROPÄISCHE PATENTSCHRIFT

(11) **EP 0 248 269 B1**
(45) Veröffentlichungstag und Bekanntmachung des Hinweises auf die Patenterteilung: **31.03.1993**
(21) Anmeldenummer: 87107289.8
(22) Anmeldetag: 19.05.1987
(51) Int. Cl.: G06F 11/26

(54) **Verfahren zur Simulation eines Unterbrechungsfehlers in einer Logikschaltung mit Feldeffekttransistoren und Anordnungen zur Durchführung des Verfahrens**
Method of simulating a disruption fault in a logic FET circuit, and arrangments for carrying out said method
Procédé de simulation d'une erreur de "circuit ouvert" d'un circuit logique à transistor à effet de champ et dispositifs pour la réalisation dudit procédé

(30) Priorität: 06.06.1986 DE 3619066
(43) Veröffentlichungstag der Anmeldung: 09.12.1987
(73) Patentinhaber: SIEMENS AKTIENGESELLSCHAFT, 80333 München (DE)
(72) Erfinder: Köppe, Siegmar, Dipl.-Ing., D-3014 Laatzen (DE)

(56) Entgegenhaltungen:
- US-A- 3 633 100
- THE BELL SYSTEM TECHNICAL JOURNAL, Band 57, Nr. 5, Mai-Juni 1978, Seiten 1449-1474, American Telephone and Telegraph Co., US; R.L. WADSACK: "Fault modeling and logic simulation of CMOS and MOS integrated circuits"
- IEEE DESIGN & TEST OF COMPUTERS, Band 2, Nr. 2, 2. April 1985, Seiten 88-95, IEEE, New York, US; J.P. HAYES: "Fault modeling, D&T tutorial"
- IBM TECHNICAL DISCLOSURE BULLETIN, Band 21, Nr. 10, März 1979, Seiten 4269-4270, New York, US; C.L. CESAR et al.: "Simultaneous unit- and zero-delay-mode fault simulation to provide decreasing redundant simulation of gates in arbitrary sequential circuits fault simulation"

## Beschreibung

Die Erfindung bezieht sich auf ein Verfahren zur Simulation eines Unterbrechungsfehlers in einer Logikschaltung mit Feldeffekttransistoren nach dem Oberbegriff des Patentanspruchs 1 und auf Anordnungen zur Durchführung des Verfahrens wie in Patentansprüchen 4, 5, 10 und 11 definiert.

Ein derartiges Verfahren ist im Bell. Syst. Techn. Journ., Mai/Juni 1978, auf den Seiten 1455-1458 beschrieben. Dabei wird davon ausgegangen, daß ein Unterbrechungsfehler (stuck-open-fault) in einer auf ihre Funktionsfähigkeit zu prüfenden Logikschaltung an einem Schaltungspunkt derselben eine Signalspeicherung hervorruft. Setzt man nämlich voraus, daß dieser Schaltungspunkt eine Kapazität hinreichender Größe aufweist, so z.B. wenn er gleichzeitig den mit einer Gatekapazität behafteten Eingang einer nachfolgenden Feldeffekttransistor-Stufe darstellt, und tritt eine fehlerbedingte Isolation des Schaltungspunktes gegenüber dem vorgeordneten, d.h. treibenden Teil der Logikschaltung auf, so bleibt der beim Wirksamwerden des Unterbrechungsfehlers jeweils vorhandene Ladungszustand der Kapazität bestehen. Wegen der Signalspeicherung ist es notwendig, einer zu überprüfenden Logikschaltung zur Erkennung eines Unterbrechungsfehlers zwei Eingangsbitmuster zuzuführen, von denen das erste als Initialisierungsmuster bezeichnet wird, das zweite als fehlererkennendes Muster. Während das erstere den Schaltungspunkt der Logikschaltung auf einen ersten Pegel, z.B. eine logische "1" setzt, bewirkt das letztere, daß an dem Schaltungspunkt, der dadurch im fehlerfreien Fall auf einen zweiten Pegel, z.B. eine logische "0", umgeladen würde, wegen des Unterbrechungsfehlers weiterhin der erste Pegel bestehen bleibt.

Für die Fehlersimulation auf der Gatterebene muß das fehlerhafte Verhalten einzelner Transistoren durch eine äquivalente Gatterschaltung modelliert werden. Die Signalspeicherung wird dabei durch eine Ausgangsstufe des Simulationsmodells der Logikschaltung berücksichtigt, die jedes an dem Schaltungspunkt auftretende, vom Unterbrechungsfehler nicht beeinflußte Signal an den Ausgang des Simulationsmodells durchschaltet, jedoch beim Auftreten eines durch den Unterbrechungsfehler beeinflußten Signals die Durchschaltung des unmittelbar vorher am Schaltungspunkt aufgetretenen Signals aufrecht erhält.

Nach dem Anlegen eines Initialisierungsmusters, welches den Ausgang des Simulationsmodells auf den ersten Pegel setzt, führt das nachfolgende Anlegen eines fehlererkennenden Musters z.B. dazu, daß die Ausgangsstufe die Durchschaltung des ersten Pegels weiter aufrecht erhält. Damit könnte der Unterbrechungsfehler am Ausgang des Simulationsmodells sofort erkannt werden, da ja hier im fehlerfreien Fall der zweite Pegel anliegen müßte.

Da aber das Simulationsmodell der Logikschaltung im allgemeinen nur einen Teil einer umfassenderen digitalen Schaltung nachbildet, ist bei der Fehlersimulation der Ausgang des Simulationsmodells meist über weitere digitale Schaltungszweige mit einem digitalen Schaltungsausgang verbunden, an dem die beim Anlegen von eingangsseitigen Bitmustern über das Simulationsmodell abgeleiteten Ausgangsmuster abgreifbar sind. Bedingt durch in den weiteren digitalen Schaltungszweigen liegende Gatter, die in Abhängigkeit von den eingangsseitigen Bitmustern vorübergehend gesperrt sein können, besteht die Schwierigkeit, daß die am Ausgang des Simulationsmodells aufgetretene fehlerhafte Signalabweichung am digitalen Schaltungsausgang nicht unmittelbar beobachtbar ist. Daher ist es im Regelfall erforderlich, dem Simulationsmodell in den sich anschließenden Taktperioden eine Mehrzahl von weiteren fehlererkennenden Mustern zuzuführen, bevor eine Beobachtbarkeit der fehlerhaften Signalabweichung am digitalen Schaltungsausgang tatsächlich gegeben ist.

Beim Anlegen einer Mehrzahl von fehlererkennenden Mustern in einer entsprechenden Anzahl von Taktperioden verstreicht eine dieser Anzahl proportionale Zeitspanne, in der der erste Pegel wegen der Funktion der Ausgangsstufe am Ausgang des Simulationsmodells bestehen bleibt. In der zu prüfenden Logikschaltung können jedoch innerhalb dieser Zeitspanne infolge von Leckströmen Umladungsvorgänge abgelaufen sein, die den Pegel am Ausgang der zu prüfenden Logikschaltung soweit verändert haben, daß er durch die nachfolgenden Schaltungsteile als zweiter Pegel erkannt wird, der ja ohne den Unterbrechungsfehler hier auch zu erwarten ist. In diesem Fall würde eine Folge von fehlererkennenden Mustern, die beim Beaufschlagen des Simulationsmodells erst nach der genannten Zeitspanne zur Erkennung eines Unterbrechungsfehlers an einem digitalen Schaltungsausgang führt, beim Durchlaufen der realen, zu prüfenden, digitalen Schaltung eine Erkennung des bei der Simulation definierten Unterbrechungsfehlers nicht mehr ermöglichen. Damit führt aber der Einsatz des oben beschriebenen Simulationsmodells mit einer Ausgangsstufe, die die beschriebenen Pegeldurchschaltungen vornimmt, zu Eingangsbitmustern, deren Anwendung eine zu hohe Fehlererkennungsrate zur Folge hat.

Der Erfindung liegt die Aufgabe zugrunde, ein Verfahren der eingangs genannten Art anzugeben, bei dem die erwähnten Unsicherheiten bei der Erkennung von Unterbrechungsfehlern weitgehend ausgeschaltet sind. Das wird erfindungsgemäß durch eine Ausbildung nach dem kennzeichnenden Teil des Patentanspruchs 1 erreicht.

Der mit dem erfindungsgemäßen Verfahren erzielte Vorteil besteht insbesondere darin, daß eine maximale Zeitspanne vorgegeben werden kann, innerhalb welcher am Ausgang einer auf Funktionsfähigkeit zu prüfenden Logikschaltung im Falle eines Unterbrechungsfehlers noch keine Umladung solcher Größe aufgetreten sein kann, daß die Erkennung dieses Fehlers erschwert oder unmöglich gemacht wird. Eine Fehlererkennung, die erst nach dem Ablauf der maximalen Zeitspanne erfolgen würde, wobei der Beginn der maximalen Zeitspanne mit der Initialisierung eines Unterbrechungsfehlers zusammenfällt, wird bei dem erfindungsgemäßen Simulationsverfahren konsequenterweise nicht zugelassen. Dadurch wird verhindert, daß sich Bitmuster in der Simulation als fehlererkennende Muster qualifizieren, die dann nicht in der Lage sind, eine Erkennung des simulierten Unterbrechungsfehlers bei der realen, leckstrombehafteten Logikschaltung sicher zu gewährleisten.

Die Ansprüche 2 und 3 sind auf bevorzugte Ausgestaltungen des Verfahrens nach der Erfindung gerichtet. Die Ansprüche 4 bis 11 betreffen vorteilhafte Anordnungen, die zur Durchführung des Verfahrens nach der Erfindung geeignet sind.

Die Erfindung wird nachfolgend anhand von in der Zeichnung dargestellten, bevorzugten Simulationsmodellen, die zur Durchführung des erfindungsgemäßen Verfahrens geeignet sind, näher erläutert. Dabei zeigt:
- Fig. 1: die Grundschaltung eines ersten nach der Erfindung ausgebildeten Simulationsmodells,
- Fig. 2: die Grundschaltung eines zweiten nach der Erfindung ausgebildeten Simulationsmodells,
- Fig. 3: eine bevorzugte Weiterbildung einer Teilschaltung von Fig. 1 oder Fig. 2,
- Fig. 4: eine bevorzugte schaltungstechnische Durchbildung einer anderen Teilschaltung von Fig. 1 oder Fig. 2,
- Fig. 5: einen Teil eines Simulationsmodells für die Funktionsprüfung eines NAND-Gatters und
- Fig. 6: eine spezielle Ausgestaltung eines Schaltungszweiges des Simulationsmodells nach Fig. 1 oder Fig. 2, die zur Durchführung einer bevorzugten Variante des erfindungsgemäßen Verfahrens dient.

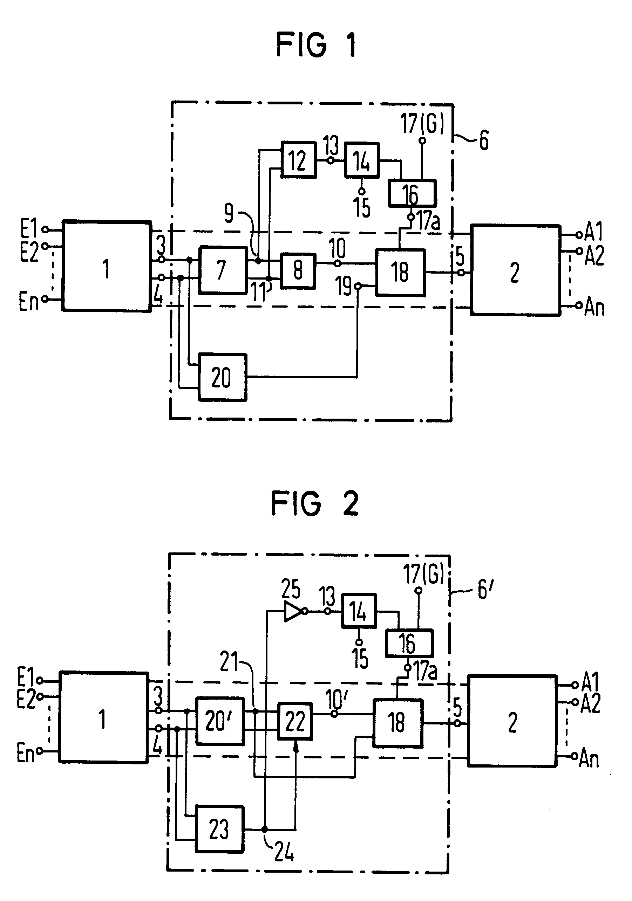

In Fig. 1 ist eine digitale Schaltung dargestellt, die einen eingangsseitigen Teil 1 und einen ausgangsseitigen Teil 2 enthält. Der Teil 1 weist eine Reihe von digitalen Eingängen E1, E2...En auf, der Teil 2 eine Reihe von digitalen Ausgängen A1, A2...An. Eine auf das Vorliegen von Unterbrechungsfehlern zu prüfende Logikschaltung, die über ihre Eingänge mit Ausgängen 3 und 4 des Teils 1 und über ihren Ausgang mit dem Eingang 5 des Teils 2 der digitalen Schaltung verbunden ist, wird durch ein Simulationsmodell 6 nachgebildet. Bei einem Simulationsverfahren wird nun so vorgegangen, daß im Simulationsmodell ein Unterbrechungsfehler vorgesehen wird und sodann in einer Mehrzahl von aufeinanderfolgenden Taktperioden eine Folge von n-stelligen Bitmustern an E1...En angelegt wird. An den Ausgängen A1...An erscheinen jeweils die über 1, 6 und 2 abgeleiteten Ausgangsmuster, die registriert und mit Sollmustern verglichen werden, die für den fehlerfreien Fall maßgebend sind. Jedes Eingangsbitmuster, das zu einem Ausgangsmuster führt, das in wenigstens einem Bit von dem entsprechenden Sollmuster abweicht, ist als ein fehlererkennendes Muster qualifiziert. Wird ein auf diese Weise ermitteltes, fehlererkennendes Muster der zu prüfenden digitalen Schaltung zugeführt, in der das Simulationsmodell 6 durch eine entsprechende, realisierte Logikschaltung ersetzt ist, so kann man für den Fall, daß bei A1...An ein Ausgangsmuster auftritt, das dem im Simulationsverfahren infolge des simulierten Fehlers aufgetretenen Muster entspricht, auf das Vorhandensein des simulierten Unterbrechungsfehlers in der realen logischen Schaltung schließen.

Das Simulationsmodell 6 weist eine Nachbildungsstufe 7 auf, die die mit einem bestimmten Unterbrechungsfehler behaftete Logikschaltung nachbildet. Der durch den Unterbrechungsfehler hervorgerufene Effekt der Signalspeicherung wird durch eine Ausgangsstufe 8 berücksichtigt, die mit ihren beiden Eingängen an zwei Ausgänge 9 und 11 der Nachbildungsstufe 7 geschaltet ist. Der Ausgang von 8 ist mit 10 bezeichnet. Die Ausgangsstufe 8 hat die Funktion, daß sie jedes durch den in 7 simulierten Unterbrechungsfehler nicht beeinflußte Signal, das am Ausgang 9 von 7 auftritt, auf ihren Ausgang 10 durchschaltet, dagegen beim Auftreten eines von dem simulierten Fehler beeinflußten Signals am Ausgang 9 nicht dieses Signal durchschaltet, sondern die Durchschaltung des letzten Signals, das vor dem Auftreten des fehlerbeeinflußten Signals an 9 aufgetreten war, weiter aufrecht erhält. Die Steuerung der Ausgangsstufe 8 erfolgt in Abhängigkeit von den an den Ausgängen 9 und 11 der Nachbildungsstufe 7 auftretenden Signalen. Die Nachbildungsstufe 7 ist dabei so ausgebildet, daß immer dann, wenn an beiden Ausgängen 9 und 11 jeweils eine logische "0" erscheint, am Ausgang 9 ein durch den Unterbrechungsfehler beeinflußtes Signal vorhanden ist.

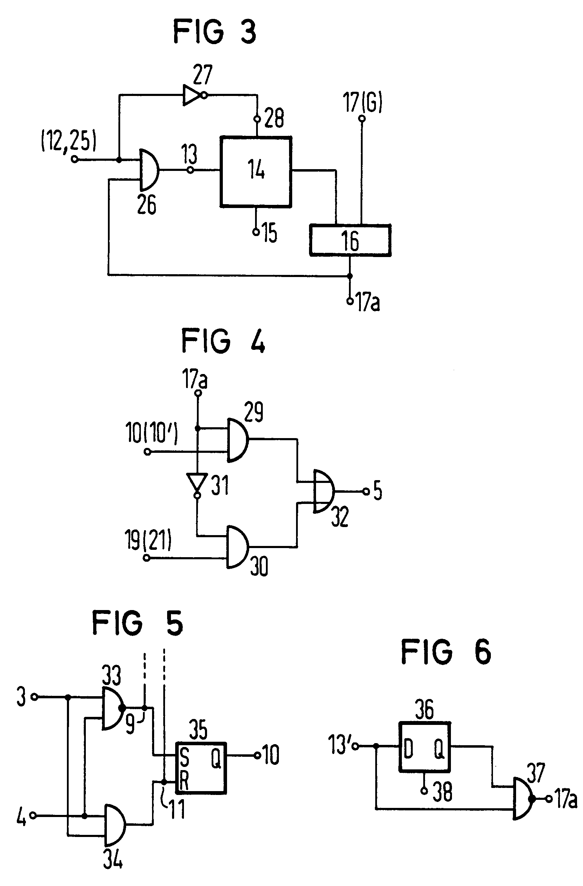

In den Proc. of the 20th Design Automation Conf. 1983 sind auf den Seiten 64-70 einige Gatterschaltungen und die entsprechenden Nachbildungsstufen einschließlich der zugehörigen Ausgangsstufen beschrieben und dargestellt. Beispielsweise zeigt die Fig. 1 dieser Veröffentlichung ein CMOS-Gatter und die Fig. 3 die entsprechende Nachbildungs- und Ausgangsstufe. In Fig. 3 dieser Veröffentlichung ist die Ausgangsstufe 8 als ein logischer Block B bezeichnet, dessen Funktionstabelle, die der Tabelle I auf Seite 65 zu entnehmen ist, mit der eines RS-Flipflops übereinstimmt.

In einem Detektor 12, der mit seinen beiden Eingängen an die Ausgänge 9 und 11 gelegt ist, wird geprüft, ob sich die Nachbildungsstufe 7 in einem Schaltzustand befindet, bei dem sowohl an 9 als auch an 11 eine logische "0" auftritt. Ist das der Fall, so wird am Ausgang von 12 eine logische "1" abgegeben. Dabei kann der Detektor 12 beispielsweise aus einem NOR-Gatter bestehen. Das Ausgangssignal von 12 wird dem Steuereingang 13 eines rücksetzbaren Zählers 14 zugeführt, dessen Takteingang 15 mit Taktimpulsen beschaltet ist, die eine Aktualisierung des Zählerstandes einmalig pro Taktperiode bewirken. Liegt eine "1" am Steuereingang 13, so addiert der zunächst auf Null rückgesetzte Zähler die über 15 zugeführten Taktimpulse auf. Bleibt also der Zustand, bei dem die Ausgänge 9 und 11 jeweils auf "0" liegen, beispielsweise während der Dauer von n aufeinanderfolgenden Taktperioden bestehen, so bleibt das unmittelbar vor dem Auftreten dieses Zustands am Ausgang 9 aufgetretene Signal für die Dauer dieser n Taktperioden auf den Ausgang durchgeschaltet, wobei der Zähler 14 wegen der für die Dauer von n Taktperioden bei 13 anliegenden "1" solange hochzählt, bis der Zählerinhalt n erreicht ist.

In einem Komparator 16 wird der Zählerinhalt, z.B. n, mit einem Grenzwert G verglichen, der über einen Eingang 17 eingegeben wird. Ist der Zählerinhalt n kleiner als oder gleich dem Grenzwert G, so wird über den Ausgang 17a von 16 eine logische "1" abgegeben, die dem Steuereingang eines Multiplexers 18 zugeführt wird. Übersteigt aber n den Grenzwert G, so gibt der Komparator 16 am Ausgang 17a eine logische "0" ab. Der Multiplexer 18 schaltet beim Empfang eines Steuersignals "1" die Signale an seinem ersten Eingang, der mit dem Ausgang 10 beschaltet ist, auf seinen Ausgang 5 durch. Beim Auftreten eines Steuersignals "0" werden dagegen die an 10 anliegenden Signale vom Ausgang 5 abgeschaltet und stattdessen die Signale, die an seinem zweiten Eingang 19 anliegen, auf 5 durchgeschaltet. Der Eingang 19 ist dabei mit dem Ausgang einer fehlerfreien Nachbildungsstufe 20 verbunden, die parallel zur Nachbildungsstufe 7 angesteuert wird und so ausgebildet ist, daß sie die Funktion der zu überprüfenden Logikschaltung fehlerfrei nachbildet.

Durch die Teile 12 bis 20 wird erreicht, daß für den Fall, daß der Zählerinhalt n den vorgegebenen Grenzwert G übersteigt, das Komparatorausgangssignal den Ausgang 5 des Multiplexers von dem am Ausgang 10 liegenden Signal abschaltet und auf das am Ausgang der fehlerfreien Nachbildungsstufe 20 liegende Signal umschaltet. Das bedeutet aber, daß beim Überschreiten von G ein von dem simulierten Unterbrechungsfehler nicht beeinflußtes Signal an den Ausgang des Simulationsmodells 6 durchgeschaltet wird. Durch den frei wählbaren Grenzwert G wird eine maximale Zeitspanne vorgegeben, innerhalb der eine Fehlererkennung mittels des am Ausgang 10 der Ausgangsstufe 8 gespeicherten Signals, das für die Erkennung des Unterbrechungsfehlers in 7 als Initialisierungssignal dient, ermöglicht wird. Nach dem Verstreichen dieser maximalen Zeitspanne wird durch die Umschaltung des Multiplexers 18 eine Fehlererkennung aufgrund dieses Initialisierungssignals verhindert. Hierdurch wird dem Umstand Rechnung getragen, daß innerhalb dieser maximalen Zeitspanne in der realen, mit parasitären Effekten, wie etwa Leckströmen, behafteten Logikschaltung der Schaltungspunkt, an dem sich eine Signalspeicherung ergibt, soweit umgeladen worden sein kann, daß die Initialisierung bereits aufgehoben und durch das komplementäre logische Signal ersetzt ist. Da der simulierte Fehler nach dem Verstreichen der maximalen Zeitspanne in der realisierten Schaltung nicht mehr mit Sicherheit erkannt werden könnte, wird eine entsprechende Fehlererkennung im Simulationsverfahren ebenfalls verhindert.

Fig. 2 zeigt eine von Fig. 1 abweichende Ausbildung des Simulationsmodells, das hier mit 6' bezeichnet ist. Dabei ist eine fehlerfreie Nachbildung 20' der zu prüfenden Logikschaltung vorgesehen, deren beide Eingänge mit den Ausgängen 3 und 4 des Teils 1 der digitalen Schaltung verbunden sind. Der Ausgang 21 von 20' ist über eine Ausgangsstufe 22, deren Ausgang mit 10' bezeichnet ist, an den ersten Eingang des Multiplexers 18 geführt, während der zweite Eingang von 18 mit dem Ausgang von 21 beschaltet ist. Eine mit einem simulierten Unterbrechungsfehler versehene Ansteuerschaltung 23, die parallel zu 20' über die Ausgänge 3 und 4 angesteuert wird, gibt beim Anlegen von Eingangssignalen, die zu einem von dem simulierten Unterbrechungsfehler nicht beeinflußten Ausgangssignal der Logikschaltung führen, über ihren Ausgang 24 eine logische "1" ab, welche die Ausgangsstufe 22 für die über 21 angelegten Signale durchlässig schaltet, so daß letztere an den Ausgang 10' gelangen. Wird jedoch über 3 und 4 ein eingangsseitiges Bitmuster an 6' angelegt, das zu einem von dem simulierten Unterbrechungsfehler beeinflußten Signal am Ausgang der Logikschaltung führt, so tritt am Ausgang 24 das logische Signal "0" auf, das die Übertragung des gleichzeitig bei 21 anliegenden Signals auf den Ausgang 10' verhindert und stattdessen die Durchschaltung des letzten vor dem Unterbrechen des Signalweges 21 - 10' bei 21 aufgetretenen Signals weiter aufrecht erhält. Das am Schaltungspunkt 24 auftretende, die Ausgangsstufe 22 steuernde Signal wird außerdem einem Inverter 25 zugeführt, dessen Ausgangssignal an den Steuereingang 13 des rücksetzbaren Zählers 14 gelegt wird. Die übrigen Schaltungsteile der Fig. 2 entsprechen den gleichbezeichneten Schaltungsteilen von Fig. 1 nach Aufbau und Wirkungsweise. Auch hier wird beim Eintreten der Bedingung, daß der Zählerinhalt n den Grenzwert G übersteigt, der Multiplexer 18 so angesteuert, daß anstelle des bei 10' anliegenden Signals das bei 21 anliegende, von dem Unterbrechungsfehler nicht beeinflußte Signal an den Ausgang 5 des Simulationsmodells 6' durchgeschaltet wird.

Ein im Bell. Syst. Techn. Journ., Mai/Juni 1978 auf den Seiten 1455-1458, insbesondere anhand der Figuren 3 und 4 beschriebenes Simulationsmodell entspricht den Teilen 20', 22 und 23 der Fig. 2. Hierbei tritt jedoch der wesentliche Nachteil auf, daß eine maximale Zeitspanne für die Erkennung eines Unterbrechungsfehlers nicht definiert werden kann.

Der rücksetzbare Zähler 14, der in den Figuren 1 und 2 als verriegelbar oder überlaufgeschützt aufzufassen ist, kann zweckmäßig, wie in Fig. 3 angedeutet, auch mit einer äußeren Verriegelung ausgestattet sein. Dabei wird er über den Ausgang 17a des Komparators 16 angesteuert. Dabei wird das Ausgangssignal von 16 dem ersten Eingang eines UND-Gatters 26 zugeführt, dessen zweiter Eingang mit dem Ausgang des Detektors 12 bzw. mit dem Ausgang des Inverters 25 verbunden ist. Der Ausgang von 26 ist mit dem Steuereingang 13 des Zählers 14 beschaltet. Weiterhin ist der zweite Eingang von 26 über einen Inverter 27 mit dem Rücksetzeingang 28 des Zählers 14 verbunden. Hierdurch wird erreicht, daß der Zähler 14, in dem Fall, daß sein Inhalt den Grenzwert G übersteigt, durch das Signal "0" am Ausgang 17a des Komparators verriegelt wird. Sein Steuereingang 13 wird dabei wegen des gesperrten UND-Gatters 26 von weiteren über den Ausgang von 12 oder 25 eintreffenden Signalen nicht beeinflußt. Die Rücksetzung des Zählers 14 erfolgt über eine logische "0", die über den Ausgang von 12 oder 25 empfangen wird.

Durch die Verriegelung des Zählers 14 wird ausgeschlossen, daß ein Weiterzählen der ankommenden Taktimpulse nach dem Überschreiten des Grenzwertes G zu einer Überschreitung der maximalen Zählkapazität führt, was automatisch wieder eine Rücksetzung des Zählers auf "0" bedeuten würde, so daß die Grenzwertbedingung n>G außer Kraft gesetzt wäre.

Eine vorteilhafte Ausbildung des Multiplexers 15 ist in Fig. 4 dargestellt. Hierbei sind zwei UND-Gatter 29 und 30 vorgesehen, deren erste Eingänge über einen Inverter 31 miteinander verbunden sind. Weiterhin ist der erste Eingang von 29 mit dem Ausgang 17a des Komparators 16 beschaltet. Der zweite Eingang von 29 liegt beim Simulationsmodell 6 am Ausgang 10 der Ausgangsstufe 8, wobei der zweite Eingang von 30 dem Schaltungspunkt 19 von Fig. 1 entspricht. Die Ausgänge der UND-Gatter 29 und 30 sind an die Eingänge eines ODER-Gatters 32 gelegt, dessen Ausgang dann den Ausgang 5 des Multiplexers darstellt. Im Falle des Simulationsmodells 6' nach Fig. 2 liegen der zweite Eingang von 29 am Schaltungspunkt 10' und der zweite Eingang von 30 am Schaltungspunkt 21.

Fig. 5 zeigt die schaltungstechnische Durchbildung einer gemäß Fig. 1 in das Simulationsmodell 6 eingesetzten Nachbildungsstufe 7 und einer zugehörigen Ausgangsstufe 8, die zur Nachbildung eines NAND-Gatters mit zwei Eingängen in komplementärer Schaltungstechnik dienen. Dabei sind ein NAND-Gatter 33 und ein UND-Gatter 34 mit ihren ersten Eingängen an den Schaltungspunkt 3 gelegt, während ihre zweiten Eingänge mit dem Schaltungspunkt 4 verbunden sind. Der Ausgang von 33 ist an den S-Eingang eines RS-Flipflops 35 gelegt, der Ausgang von 34 an dessen R-Eingang. Der Ausgang Q des RS-Flipflops 35 entspricht dem Schaltungspunkt 10 von Fig. 1. Ein Unterbrechungsfehler in einem der beiden Parallelzweige des nachgebildeten NAND-Gatters wird durch einen Haftfehler am ersten Eingang von 33 simuliert, ein Unterbrechungsfehler in dem anderen der beiden Parallelzweige durch einen Haftfehler am zweiten Eingang von 33. Diese beiden Haftfehler, die als "stuck-at-1"-Fehler ausgebildet sind, werden ihrerseits durch eine Abtrennung des jeweiligen Eingangs von dem Schaltungspunkt 3 bzw. 4 und durch das Anlegen eines Pegels, der einer logischen "1" entspricht, an den jeweils abgetrennten Eingang von 33 simuliert. Ein Unterbrechungsfehler im Serienzweig des nachgebildeten NAND-Gatters wird durch einen Haftfehler am Ausgang von 34 simuliert. Dieser Haftfehler wird als ein "stuck-at-0"-Fehler ausgebildet und in der Weise simuliert, daß der R-Eingang von 35 vom Ausgang des UND-Gatters 34 abgetrennt und mit einem Pegel belegt wird, der einer logischen "0" entspricht.

Der Grenzwert G für die Anzahl der Taktperioden, über die eine Ladung an den durch den Unterbrechungsfehler isolierten Schaltungspunkt der zu prüfenden Logikschaltung sicher erhalten bleibt, ist technologie- und strukturabhängig, da eine größere Kapazität an diesem Schaltungspunkt auch einer längeren Haltezeit und damit einem größeren Grenzwert entspricht. Ist der Grenzwert jedoch unbekannt, so kann der ungünstigste Fall angenommen werden, der einem Grenzwert von "1" entspricht. Das bedeutet, daß an dem genannten Schaltungspunkt nur eine Speicherfähigkeit von einer Taktperiode angenommen wird. Für diesen Fall kann der zwischen den Schaltungspunkten 13 und 17a liegende Schaltungsteil der Figuren 1 und 2 durch eine stark vereinfachte Teilschaltung gemäß Fig. 6 ersetzt werden. Dabei entspricht der Schaltungspunkt 13 der Figuren 1 und 2 dem Schaltungspunkt 13' in Fig. 6. 13' bildet den Eingang eines D-Flipflops 36. Der Ausgang Q desselben ist an den ersten Eingang eines NAND-Gatters 37 gelegt, dessen zweiter Eingang mit 13' verbunden ist. Der Ausgang von 37 bildet den Schaltungspunkt 17a in den Figuren 1 oder 2. 38 bezeichnet einen Eingang von 36, der mit Taktimpulsen belegt ist.

Eine am Schaltungspunkt 13' liegende logische "1" wird beim Auftreten des nachfolgenden Taktimpulses am Eingang 38 auf den Ausgang Q übertragen. Liegt dann während der durch diesen Taktimpuls definierten Taktperiode eine logische "1" weiterhin am Schaltungspunkt 13' an, was einer Zeitspanne von zwei Taktperioden gemäß den obigen anhand von Fig. 1 gegebenen Erläuterungen entspricht, so wird das NAND-Gatter 37 über jeden seiner beiden Eingänge mit einer logischen "1" belegt. Das bedeutet aber eine Überschreitung des Grenzwertes G=1, bei der der Ausgang von 17a von einer logischen "1" auf eine logische "0" umgeschaltet wird. Die Rücksetzfunktion ist ebenfalls gewährleistet, da das Gatter 37 bei einer "0" am Eingang 13' eine Verriegelung aufhebt und am Ausgang 17a wieder eine logische "1" gesetzt wird. Somit wird der Grenzwert G=1 in sehr einfacher Weise durch die Funktion des D-Flipflops 36 und des NAND-Gatters 37 simuliert.

### Bezugszeichenliste

- 1: eingangsseitiger Teil einer digitalen Schaltung
- 2: ausgangsseitiger Teil der digitalen Schaltung
- 3, 4: Ausgänge von 1
- 5: Eingang von 2
- 6: Simulationsmodell
- 7: Nachbildungsstufe
- 8: Ausgangsstufe
- 9: Ausgang von 7
- 10: Ausgang von 8
- 11: Ausgang von 7
- 12: Detektor
- 13: Steuereingang von 14
- 14: rücksetzbarer Zähler
- 15: Takteingang von 14
- 16: Komparator
- 17: Eingang von 16
- 17a: Ausgang von 16
- 18: Multiplexer
- 19: Eingang von 18
- 20, 20': Nachbildungsstufen
- 21: Ausgang von 20'
- 22: Ausgangsstufe
- 23: Ansteuerschaltung
- 24: Ausgang von 23
- 25: Inverter
- 26: UND-Gatter
- 27: Inverter
- 28: Rücksetzeingang von 14
- 29, 30: UND-Gatter
- 31: Inverter
- 32: ODER-Gatter
- 33: NAND-Gatter
- 34: UND-Gatter
- 35: RS-Flipflop
- 36: D-Flipflop
- 37: NAND-Gatter
- 38: Eingang von 36
- E1...En: digitale Eingänge
- A1...An: digitale Ausgänge

## Patentansprüche

1. Verfahren zur Simulation eines Unterbrechungsfehlers in einer Logikschaltung mit Feldeffekttransistoren, bei dem von einer jeweils in aufeinanderfolgenden Taktperioden angelegten Folge von Eingangsbitmustern über ein den Fehler enthaltendes Simulationsmodell (6) Ausgangsbitmuster abgeleitet werden, die mit für den fehlerfreien Fall geltenden Sollmustern verglichen werden, bei dem eine durch den Unterbrechungsfehler unmittelbar bedingte, an einem Schaltungspunkt der Logikschaltung auftretende Signalspeicherung durch die Funktion einer Ausgangsstufe (8) berücksichtigt wird, die ein an dem Schaltungspunkt auftretendes, durch den Unterbrechungsfehler nicht beeinflußtes Signal an ihren Ausgang (10) durchschaltet, jedoch beim Auftreten eines durch den Unterbrechungsfehler beeinflußten Signals die Durchschaltung des unmittelbar vor diesem an dem Schaltungspunkt aufgetretenen Signals aufrecht erhält, **dadurch gekennzeichnet,** daß die Aufrechterhaltung der Durchschaltung des unmittelbar vorher aufgetretenen Signals beim Auftreten weiterer durch den Unterbrechungsfehler beeinflußter Signale in den sich anschließenden Taktperioden dann beendet wird, wenn die Anzahl der an dem Schaltungspunkt aufgetretenen, durch den Unterbrechungsfehler beeinflußten Signale einen vorgegebenen Grenzwert (G) übersteigt.

2. Verfahren nach Anspruch 1, **dadurch gekennzeichnet,** daß bei Beendigung der Durchschaltung des unmittelbar vorher aufgetretenen Signals das letztere durch das bei einer fehlerfreien Nachbildung der Logikschaltung an dem entsprechenden Schaltungspunkt auftretende Signal ersetzt wird.

3. Verfahren nach einem der Ansprüche 1 oder 2, **dadurch gekennzeichnet,** daß der vorgegebene Grenzwert zu 1 gewählt wird, so daß die Aufrechterhaltung der Durchschaltung des unmittelbar vorher aufgetretenen Signals beim Auftreten eines einzigen weiteren, durch den Unterbrechungsfehler beeinflußten Signals an dem Schaltungspunkt beendet wird.

4. Anordnung zur Durchführung des Verfahrens nach Anspruch 1 oder 2, bei welcher eine Nachbildungsstufe (7) vorgesehen ist, die in Verbindung mit einer nachgeschalteten, die Funktion eines RS-Flipflops nachbildenden Ausgangsstufe (8) eine mit einem Unterbrechungsfehler behaftete Logikschaltung simuliert dadurch gekennzeichnet, daß die Ansteuerung der Ausgangsstufe über zwei Ausgänge (9, 11) der Nachbildungsstufe (7) in der Weise erfolgt, daß ein an dem einen Ausgang (9) der Nachbildungsstufe (7) auftretendes Signal, das von dem Unterbrechungsfehler nicht beeinflußt ist, an den Ausgang (10) der ersten Ausgangsstufe (8) durchgeschaltet wird, und daß beim Auftreten eines von dem Unterbrechungsfehler beeinflußten Signals an dem einen Ausgang (9) der Nachbildungsstufe (7) die Durchschaltung des unmittelbar vor diesem an dem einen Ausgang (9) der Nachbildungsstufe (7) aufgetretenen Signals aufrecht erhalten wird, daß ein an die beiden Ausgänge (9, 11) der Nachbildungsstufe (7) gelegter Detektor (12) vorgesehen ist, der beim Auftreten einer für den Unterbrechungsfehler signifikanten Signalbelegung an den beiden Ausgängen (9, 11) der Nachbildungsstufe (7) ein Ausgangssignal abgibt, das einen rücksetzbaren Zähler (14) zum Aufaddieren von über einen Takteingang (15) empfangenen Taktimpulsen veranlaßt, daß ein Komparator (16) vorgesehen ist, dem ein den Zählerinhalt angebendes Signal und ein mit diesem zu vergleichender Grenzwert (G) eingegeben werden, und daß der Komparator (16) über seinen Ausgang (17a) mit dem Steuereingang eines Multiplexers (18) verbunden ist, dessen erster Eingang mit dem Ausgang (10) der ersten Ausgangsstufe (8) verbunden ist, dessen dessen zweiter Eingang mit einem Ausgang einer gemeinsam mit der Nachbildungsstufe (7) angesteuerten, fehlerfreien Nachbildung (20) der Logikschaltung beschaltet ist und dessen Ausgang (5) den Ausgang des Fehler enthaltenden Simulationsmodells (6) darstellt.

5. Anordnung zur Durchführung des Verfahrens nach Anspruch 1 oder 2 bei welcher eine die Funktion der zu prüfenden Logikschaltung simulierende, fehlerfreie Nachbildungsstufe (20') vorgesehen ist, der eine zweite Ausgangsstufe (22) mit einem Daten- und einem Steuereingang nachgeschaltet ist, wobei der Dateneingang der zweiten Ausgangsstufe (22) mit dem Ausgang (21) der fehlerfreien Nachbildungsstufe (20') verbunden ist, sowie eine für den zu simulierenden Unterbrechungsfehler ausgelegte, parallel zu der fehlerfreien Nachbildungsstufe (20') angesteuerte Ansteuerschaltung (23) vorhanden ist, deren Ausgang mit dem Steuereingang der zweiten Ausgangsstufe (22) beschaltet ist, **dadurch gekennzeichnet,** daß die Ansteuerschaltung (23) beim Auftreten einer vom Unterbrechungsfehler nicht zu beeinflussenden Signalbelegung an den Eingängen der Nachbildungsstufe (20') ein erstes Ausgangssignal (24, "1") abgibt, das den Ausgang der fehlerfreien Nachbildungsstufe (20') auf den Ausgang (10') der zweiten Ausgangsstufe (22) durchschaltet, beim Auftreten einer durch den Unterbrechungsfehler zu beeinflussenden Signalbelegung an den Eingängen der Nachbildungsstufe (20') jedoch ein zweites Ausgangssignal (24, "0") abgibt, das die Durchschaltung des unmittelbar vor dem Anlegen dieser letztgenannten Signalbelegung am Ausgang (21) der fehlerfreien Nachbildungsstufe (20') aufgetretenen Signals auf den Ausgang (10') der zweiten Ausgangsstufe (22) aufrecht erhält, daß das zweite Ausgangssignal der Ansteuerschaltung (23) einen rücksetzbaren Zähler (14) zum Aufaddieren von über einen Takteingang empfangenen Taktimpulsen veranlaßt, daß ein Komparator (16) vorgesehen ist, dem ein den Zählerinhalt angebendes Signal und ein mit diesem zu vergleichender Grenzwert eingegeben werden, und daß der Komparator (16) über seinen Ausgang (17a) mit dem Steuereingang eines Multiplexers (18) verbunden ist, dessen erster Eingang mit dem Ausgang (10') der zweiten Ausgangsstufe (22) verbunden ist, dessen zweiter Eingang mit dem Ausgang (21) der fehlerfreien Nachbildungsstufe (20') der Logikschaltung beschaltet ist und dessen Ausgang den Ausgang (5) des Fehler enthaltenden Simulationsmodells (6' ) darstellt.

6. Anordnung nach einem der Ansprüche 4 oder 5, **dadurch gekennzeichnet,** daß dem Steuereingang (13) des rücksetzbaren Zählers (14) ein erstes UND-Gatter (26) vorgeschaltet ist, dessen einer Eingang mit dem Ausgang (17a) des Komparators (16) beschaltet ist.

7. Anordnung nach Anspruch 6, **dadurch gekennzeichnet,** daß der andere Eingang des ersten UND-Gatters (26) über einen ersten Inverter (27) mit einem Rücksetzeingang (28) des rücksetzbaren Zählers (14) verbunden ist.

8. Anordnung nach einem der Ansprüche 4 bis 7, **dadurch gekennzeichnet,** daß der Multiplexer ein zweites und ein drittes UND-Gatter (29, 30) enthält, deren erste Eingänge über einen zweiten Inverter (31) miteinander verbunden sind, daß der zweite Eingang des zweiten UND-Gatters (29) mit dem Ausgang (10, 10') der ersten bzw. zweiten Ausgangsstufe (8, 22) beschaltet ist, daß der zweite Eingang des dritten UND-Gatters (30) mit dem Ausgang der fehlerfreien Nachbildung (20) bzw. der fehlerfreien Nachbildungsstufe (20') der Logikschaltung beschaltet ist und daß die Ausgänge des zweiten und dritten UND-Gatters (29, 30) an die Eingänge eines ODER-Gatters (32) gelegt sind, dessen Ausgang den Ausgang (5) des Multiplexers darstellt.

9. Anordnung nach Anspruch 4, **dadurch gekennzeichnet,** daß die Nachbildungsstufe (7) die Funktion eines NAND-Gatters nachbildet und aus einem ersten NAND-Gatter (33) und einem zweiten UND-Gatter (34) besteht, deren erste Eingänge jeweils einen Eingang der Nachbildungsstufe darstellen, daß ihre zweiten Eingänge jeweils mit dem ersten Eingang des jeweils anderen dieser beiden Gatter (34, 33) verbunden sind, und daß die Ausgänge des ersten NAND-Gatters (33) und des zweiten UND-Gatters (34) jeweils mit dem S-Eingang und dem R-Eignang eines die Ausgangsstufe (8) bildenden RS-Flip-flops (35) beschaltet sind, dessen einer Ausgang den Ausgang der ersten Ausgangsstufe (8) darstellt, wobei der S-und R-Eingang mit den Eingängen des Detektors (12) beschaltet sind.

10. Anordnung zur Durchführung des Verfahrens nach Anspruch 3, bei welcher eine Nachbildungsstufe (7) vorgesehen ist, die in Verbindung mit einer nachgeschalteten, die Funktion eines RS-Flipflops nachbildenden Ausgangsstufe (8) eine mit einem Unterbrechungsfehler behaftete Logikschaltung simuliert **dadurch gekennzeichnet,** daß die Ansteuerung der Ausgangsstufe über zwei Ausgänge (9, 11) der Nachbildungsstufe (7) in der Weise erfolgt, daß ein an dem einen Ausgang (9) der Nachbildungsstufe (7) auftretendes Signal, das von dem Unterbrechungsfehler nicht beeinflußt ist, an den Ausgang (10) der ersten Ausgangsstufe (8) durchgeschaltet wird, und daß beim Auftreten eines von dem Unterbrechungsfehler beeinflußten Signals an dem einen Ausgang (9) der Nachbildungsstufe (7) die Durchschaltung des unmittelbar vor diesem an dem einen Ausgang (9) der Nachbildungsstufe (7) aufgetretenen Signals aufrecht erhalten wird, daß ein an die beiden Ausgänge (9, 11) der Nachbildungsstufe (7) gelegter Detektor (12) vorgesehen ist, der beim Auftreten einer für den Unterbrechungsfehler signifikanten Signalbelegung an den beiden Ausgängen (9, 11) der Nachbildungsstufe (7) ein Ausgangssignal abgibt, das dem Eingang eines über einen Takteingang (38) mit Taktimpulsen beaufschlagten D-Flipflops (36) zugeführt wird, und daß der Eingang und der Ausgang des D-Flipflops (36) an die beiden Eingänge eines zweiten NAND-Gatters (37) geschaltet sind, dessen Ausgang mit dem Steuereingang eines Multiplexers (18) verbunden ist, dessen erster Eingang mit dem Ausgang (10) der Ausgangsstufe (8) verbunden ist, dessen zweiter Eingang mit einem Ausgang einer gemeinsam mit der Nachbildungsstufe ( 7) angesteuerten, fehlerfreien Nachbildung der Logikschaltung beschaltet ist, und dessen Ausgang den Ausgang des Fehler enthaltenden Simulationsmodells darstellt.

11. Anordnung zur Durchführung des Verfahrens nach Anspruch 3, bei welcher eine die Funktion der zu prüfenden Logikschaltung simulierende, fehlerfreie Nachbildungsstufe (20') vorgesehen ist, der eine zweite Ausgangsstufe (22) mit einem Daten- und einem Steuereingang nachgeschaltet ist, wobei der Dateneingang der zweiten Ausgangsstufe (22) mit dem Ausgang (21) der fehlerfreien Nachbildungsstufe (20') verbunden ist, sowie eine für den zu simulierenden Unterbrechungsfehler ausgelegte, parallel zu der fehlerfreien Nachbildungsstufe (20') angesteuerte Ansteuerschaltung (23) vorhanden ist, deren Ausgang mit dem Steuereingang der zweiten Ausgangsstufe (22) beschaltet ist, **dadurch gekennzeichnet,** daß die Ansteuerschaltung (23) beim Auftreten einer vom Unterbrechungsfehler nicht zu beeinflussenden Signalbelegung an den Eingängen der Nachbildungsstufe (20') ein erstes Ausgangssignal (24, "1") abgibt, das den Ausgang der fehlerfreien Nachbildungsstufe (20') auf den Ausgang (10') der zweiten Ausgangsstufe (22) durchschaltet, beim Auftreten einer durch den Unterbrechungsfehler zu beeinflussenden Signalbelegung an den Eingängen der Nachbildungsstufe (20') jedoch ein zweites Ausgangssignal (24, "0") abgibt, das die Durchschaltung des unmittelbar vor dem Anlegen dieser letztgenannten Signalbelegung am Ausgang (21) der fehlerfreien Nachbildungsstufe (20') aufgetretenen Signals auf den Ausgang (10') der zweiten Ausgangsstufe (22) aufrecht erhält, daß die Ausgangssignale der Ansteuerschaltung (23) dem Eingang eines über einen Takteingang (38) mit Taktimpulsen beaufschlagten D-Flipflops (36) zugeführt werden, daß der Eingang und der Ausgang des D-Flipflops (36) an die beiden Eingänge eines zweiten NAND-Gatters (37) geschaltet sind, dessen Ausgang mit dem Steuereingang eines Multiplexers (18) verbunden ist, dessen erster Eingang mit dem Ausgang (10') der zweiten Ausgangsstufe (22) verbunden ist, dessen zweiter Eingang mit dem Ausgang (21) der fehlerfreien Nachbildungsstufe (20') der Logikschaltung beschaltet ist, und dessen Ausgang den Ausgang des Fehler enthaltenden Simulationsmodells darstellt.

## Claims

1. Method for simulating a continuity fault in a logic circuit with field-effect transistors, in which output bit patterns are derived from a series of input bit patterns applied in successive clock periods in each case via a simulation model (6) containing the fault, which output bit patterns are compared with reference patterns valid for the fault-free case, and in which a signal storage which is directly caused by the continuity fault and occurs at a circuit point of the logic circuit is taken into account by the function of an output stage (8) which connects through to its output (10) a signal that appears at the circuit point and is not influenced by the continuity fault, but when a signal influenced by the continuity fault appears, maintains the through-connection of the signal appearing immediately previously thereto at the circuit point, characterised in that the maintenance of the through-connection of the signal appearing immediately previously is terminated upon the appearance of further signals influenced by the continuity fault in the following clock periods whenever the number of signals that appeared at the circuit point and were influenced by the continuity fault exceeds a predetermined limit value (G).

2. Method according to Claim 1, characterised in that upon termination of the through-connection of the signal appearing immediately previously, the latter is replaced by the signal appearing at the respective circuit point in the case of a fault-free simulation of the logic circuit.

3. Method according to one of Claims 1 or 2, characterised in that the predetermined limit value is selected to be 1, so that the maintenance of the through-connection of the signal appearing immediately previously is terminated upon the appearance at the circuit point of a single further signal influenced by the continuity fault.

4. Arrangement for carrying out the method according to Claim 1 or 2, in which a simulation stage (7) is provided, which simulates a logic circuit affected by a continuity fault in connection with a downstream output stage (8) simulating the function of an RS flip-flop, characterised in that the output stage is driven via two outputs (9, 11) of the simulation stage (7) in such a way that a signal appearing at one output (9) of the simulation stage (7) which is not influenced by the continuity fault is connected through to the output (10) of the first output stage (8), and in that upon the appearance of a signal influenced by the continuity fault at one output (9) of the simulation stage (7), the through-connection of the signal appearing immediately previously thereto at one output (9) of the simulation stage (7) is maintained, in that a detector (12) connected to the two outputs (9, 11) of the simulation stage (7) is provided, which outputs an output signal upon the appearance of a signal state that is significant for the continuity fault at the two outputs (9, 11) of the simulation stage (7), which output signal triggers a resettable counter (14) to add up clock pulses received via a clock input (15), in that a comparator (16) is provided, into which a signal indicating the counter contents and a limit value (G) to be compared therewith are entered, and in that the comparator (16) is connected via its output (17a) to the control input of a multiplexer (18), the first input of which is connected to the output (10) of the first output stage (8), the second input of which is connected to an output of a fault-free simulation means (20) of the logic circuit driven together with the simulation stage (7), and the output (5) of which constitutes the output of the simulation model (6) containing the fault.

5. Arrangement for carrying out the method according to Claim 1 or 2, in which a fault-free simulation stage (20') which simulates the function of the logic circuit to be tested is provided, downstream of which a second output stage (22) with a data input and a control input is connected, the data input of the second output stage (22) being connected to the output (21) of the fault-free simulation stage (20'), and also a drive circuit (23) designed for the continuity fault to be simulated and driven in parallel with the fault-free simulation stage (20') is provided, the output of which is connected to the control input of the second output stage (22), characterised in that the drive circuit (23) outputs a first output signal (24, "1") upon the appearance of a signal state not to be influenced by the continuity fault at the inputs of the simulation stage (20'), which output signal (24, "1") connects through the output of the fault-free simulation stage (20') to the output (10') of the second output stage (22), but outputs a second output signal (24, "0") upon the appearance of a signal state to be influenced by the continuity fault at the inputs of the simulation stage (20'), which output signal (24, "0") maintains the through-connection of the signal appearing immediately prior to the application of said last-mentioned signal state at the output (21) of the fault-free simulation stage (20') to the output (10') of the second output stage (22), in that the second output signal of the drive circuit (23) triggers a resettable counter (14) to add up clock pulses received via a clock input, in that a comparator (16) is provided, into which a signal indicating the counter contents and a limit value to be compared therewith are entered, and in that the comparator (16) is connected via its output (17a) to the control input of a multiplexer (18), the first input of which is connected to the output (10') of the second output stage (22), the second input of which is connected to the output (21) of the fault-free simulation stage (20') of the logic circuit, and the output of which constitutes the output (5) of the simulation model (6') containing the fault.

6. Arrangement according to one of Claims 4 or 5, characterised in that connected upstream of the control input (13) of the resettable counter (14) is a first AND gate (26), the one input of which is connected to the output (17a) of the comparator (16).

7. Arrangement according to Claim 6, characterised in that the other input of the first AND gate (26) is connected to a reset input (28) of the resettable counter (14) via a first inverter (27).

8. Arrangement according to one of Claims 4 to 7, characterised in that the multiplexer contains a second and a third AND gate (29, 30), the first inputs of which are connected to one another via a second inverter (31), in that the second input of the second AND gate (29) is connected to the output (10, 10') of the first and second output stage (8, 22) respectively, in that the second input of the third AND gate (30) is connected to the output of the fault-free simulation means (20) or the fault-free simulation stage (20') of the logic circuit, and in that the outputs of the second and third AND gates (29, 30) are connected to the inputs of an OR gate (32), the output of which constitutes the output (5) of the multiplexer.

9. Arrangement according to Claim 4, characterised in that the simulation stage (7) simulates the function of a NAND gate and comprises a first NAND gate (33) and a second AND gate (34), the first inputs of which constitute in each case one input of the simulation stage, in that their second inputs are connected in each case to the first input of the respective other of these two gates (34, 33), and in that the outputs of the first NAND gate (33) and of the second AND gate (34) are connected in each case to the S input and to the R input of an RS flip-flop (35) forming the output stage (8), one output of which RS flip-flop constitutes the output of the first output stage (8), the S and the R input being connected to the inputs of the detector (12).

10. Arrangement for carrying out the method according to Claim 3, in which a simulation stage (7) is provided, which simulates a logic circuit affected by a continuity fault in connection with a downstream output stage (8) simulating the function of an RS flip-flop, characterised in that the output stage is driven via two outputs (9, 11) of the simulation stage (7) in such a way that a signal appearing at one output (9) of the simulation stage (7) which is not influenced by the continuity fault is connected through to the output (10) of the first output stage (8), and in that upon the appearance of a signal influenced by the continuity fault at one output (9) of the simulation stage (7), the through-connection of the signal appearing immediately previously thereto at one output (9) of the simulation stage (7) is maintained, in that a detector (12) connected to the two outputs (9, 11) of the simulation stage (7) is provided, which outputs an output signal upon the appearance of a signal state that is significant for the continuity fault at the two outputs (9, 11) of the simulation stage (7), which output signal is supplied to the input of a D-type flip-flop (36) which receives clock pulses via a clock input (38), and in that the input and the output of the D-type flip-flop (36) are connected to the two inputs of a second NAND gate (37), the output of which is connected to the control input of a multiplexer (18), the first input of which is connected to the output (10) of the output stage (8), the second input of which is connected to an output of a fault-free simulation means of the logic circuit driven together with the simulation stage (7), and the output of which constitutes the output of the simulation model containing the fault.

11. Arrangement for carrying out the method according to Claim 3, in which a fault-free simulation stage (20') which simulates the function of the logic circuit to be tested is provided, downstream of which a second output stage (22) with a data input and a control input is connected, the data input of the second output stage (22) being connected to the output (21) of the fault-free simulation stage (20'), and also a drive circuit (23) designed for the continuity fault to be simulated and driven in parallel with the fault-free simulation stage (20') is provided, the output of which is connected to the control input of the second output stage (22), characterised in that the drive circuit (23) outputs a first output signal (24, "1") upon the appearance of a signal state not to be influenced by the continuity fault at the inputs of the simulation stage (20'), which output signal (24, "1") connects through the output of the fault-free simulation stage (20') to the output (10') of the second output stage (22), but outputs a second output signal (24, "0") upon the appearance of a signal state to be influenced by the continuity fault at the inputs of the simulation stage (20'), which output signal (24, "0") maintains the through-connection of the signal appearing immediately prior to the application of said last-mentioned signal state at the output (21) of the fault-free simulation stage (20') to the output (10') of the second output stage (22), in that the output signals of the drive circuit (23) are supplied to the input of a D-type flip-flop (36) which receives clock pulses via a clock input (38), and in that the input and the output of the D-type flip-flop (36) are connected to the two inputs of a second NAND gate (37), the output of which is connected to the control input of a multiplexer (18), the first input of which is connected to the output (10') of the second output stage (22), the second input of which is connected to the output (21) of the fault-free simulation stage (20') of the logic circuit, and the output of which constitutes the output of the simulation model containing the fault.

## Revendications

1. Procédé pour simuler un défaut d'interruption dans un circuit logique à transistors à effet de champ, dans lequel, à partir d'une suite de configurations binaires d'entrée appliquées dans des périodes d'horloge successives et par l'intermédiaire d'un modèle de simulation (6) comportant le défaut, on dérive des configurations binaires de sortie, qui sont comparées à des configurations théoriques s'appliquant au cas sans défaut, dans lequel une mémorisation du signal conditionnée directement par le défaut d'interruption et se produisant en un point de circuit du circuit logique, est prise en compte par la fonction d'un étage de sortie (8), qui transmet par sa sortie (10), un signal se produisant audit point de circuit et qui n'est pas influencé par le défaut d'interruption, alors que, lors de l'apparition d'un signal influencé par le défaut d'interruption, cet étage de sortie maintient le passage du signal qui se produit au niveau dudit point de circuit directement avant celui influencé par le défaut d'interruption, caractérisé en ce que le maintien du passage du signal se produisant directement auparavant, prend fin à l'apparition d'autres signaux influencés par le défaut d'interruption, si le nombre de signaux qui se produisent au niveau dudit point de circuit et qui sont influencés par le défaut d'interruption, dépasse une valeur limite (G) déterminée à l'avance.

2. Procédé selon la revendication 1, caractérisé en ce que, à la fin du passage du signal se produisant directement auparavant, ce dernier est substitué au signal se produisant au niveau dudit point de circuit correspondant, lors d'une simulation sans défaut du circuit logique.

3. Procédé selon l'une des revendications 1 ou 2, caractérisé en ce que la valeur limite déterminée à l'avance est choisie à 1, de sorte que le maintien du passage du signal se produisant directement auparavant est terminé à l'apparition au niveau dudit point de circuit d'un autre signal individuel influencé par le défaut d'interruption.

4. Dispositif pour la mise en oeuvre du procédé selon la revendication 1 ou 2, dans lequel il est prévu un étage de simulation (7), qui, en liaison avec un étage de sortie (8) monté en aval et simulant la fonction d'un multivibrateur RS, simule un circuit logique affecté d'un défaut d'interruption, caractérisé en ce que l'attaque de l'étage de sortie est effectuée de telle façon par l'intermédiaire deux sorties (9, 11) de l'étage de simulation (7), qu'un signal qui apparaît à l'une (9) des sorties de l'étage de simulation (7) et qui n'est pas influencé par le défaut d'interruption, est transmis à la sortie (10) du premier étage de sortie (8), et que, à l'apparition, à l'une (9) des sorties de l'étage de simulation (7), d'un signal influencé par le défaut d'interruption, le passage du signal se produisant directement avant celui-ci, à l'une (9) des sorties de l'étage de simulation (8), est maintenu, en ce qu'il est prévu un détecteur (12) qui est relié aux deux sorties (9, 11) de l'étage de simulation (7) et qui délivre, à l'apparition, au niveau des deux sorties (9, 11) de l'étage de simulation (7), d'une occupation de signal significative pour le défaut d'interruption, un signal de sortie qui déclenche un compteur (14) régressif pour additionner des impulsions d'horloge reçues par l'intermédiaire d'une entrée d'horloge (15), en ce qu'il est prévu un comparateur (16), auquel sont envoyés un signal indiquant le contenu du compteur et une valeur limite (G) à comparer à ce signal, et en ce que le comparateur (16) est relié, par l'intermédiaire de sa sortie (17a), à l'entrée de commande d'un multiplexeur (18), dont la première entrée est reliée à la sortie (10) du premier étage de sortie (8), dont la seconde entrée est reliée à une sortie d'un simulateur sans défaut (20) du circuit logique qui est commandé en commun avec l'étage de simulation (7), et dont la sortie (5) représente la sortie du modèle de simulation (6) comprenant des défauts.

5. Dispositif pour la mise en oeuvre du procédé selon la revendication 1 ou 2, dans lequel il est prévu un étage de simulation (20') sans défaut qui simule la fonction du circuit logique à tester et auquel est relié en aval un deuxième étage de sortie (22) à entrée de commande et à entrée de données, du type dans lequel l'entrée de données du deuxième étage de sortie (22) est reliée à la sortie (21) de l'étage de simulation (20') sans défaut, et dans lequel il est prévu un circuit de commande ou d'attaque (23) qui est commandé en parallèle avec l'étage de simulation (20') sans défaut, et qui est conçu pour le défaut d'interruption à simuler et dont la sortie est reliée à l'entrée de commande du deuxième étage de sortie (22), caractérisé en ce que le circuit de commande (23) délivre, à l'apparition, aux entrées de l'étage de simulation (20'), d'une occupation de signal qui n'est pas à influencer par le défaut d'interruption, un premier signal de sortie (24, "1") qui relie la sortie de l'étage de simulation (20') sans défaut à la sortie (10') du deuxième étage de sortie (22), alors que ce circuit de commande délivre, à l'apparition, aux entrées de l'étage de simulation (20'), d'une occupation de signal qui est à influencer par le défaut d'interruption, un deuxième signal de sortie (24, "0") qui permet de maintenir, à la sortie (10') du deuxième étage de sortie (22), le passage du signal se produisant directement avant l'application de cette occupation de signal précédemment citée à la sortie (21) de l'étage de simulation (20') sans défaut, en ce que le deuxième signal de sortie du circuit de commande (23) déclenche un compteur régressif (14) pour additionner des impulsions d'horloge délivrées par une entrée d'horloge, en ce qu'il est prévu un comparateur (16) auquel sont envoyés un signal délivrant le contenu du compteur et une valeur limite qui est à comparer avec ce signal, et en ce que le comparateur (16) est relié, par l'intermédiaire de sa sortie (17a), à l'entrée de commande d'un multiplexeur (18) dont la première entrée est reliée à la sortie (10') du deuxième étage de sortie (22), dont la deuxième entrée est reliée à la sortie (21) de l'étage de simulation (20') sans défaut du circuit logique, et dont la sortie représente la sortie (5) du modèle de simulation (6') comportant le défaut.

6. Dispositif selon l'une des revendications 4 ou 5, caractérisé en ce qu'une première porte ET (26), dont une entrée est reliée à la sortie (17a) du comparateur (16), est reliée en amont à l'entrée de commande (13) du compteur (14) de remise à l'état initial.

7. Dispositif selon la revendication 6, caractérisé en ce que l'autre entrée de la première porte ET (26) est reliée, par l'intermédiaire d'un premier inverseur (27), à une entrée (28) de remise à l'état initial du compteur régressif (14).

8. Dispositif selon l'une des revendications 4 à 7, caractérisé en ce que le multiplexeur comporte une deuxième et une troisième porte ET (29, 30), dont les premières entrées sont reliées entre elles par l'intermédiaire d'un deuxième inverseur (31), en ce que la deuxième entrée de la deuxième porte ET (29) est reliée à la sortie (10, 10') du premier ou du deuxième étage de sortie (8, 22), en ce que la seconde entrée de la troisième porte ET (30) est reliée à la sortie du simulateur (20) sans défaut ou de l'étage de simulation (20') sans défaut du circuit logique, et en ce que les sorties de la deuxième et de la troisième portes ET (29, 30) sont reliées aux entrées d'une porte OU (32) dont la sortie représente la sortie (5) du multiplexeur.

9. Dispositif selon la revendication 4, caractérisé en ce que l'étage de simulation (7) simule la fonction d'une porte NON ET et se compose d'une première porte NON ET (33) et d'une deuxième porte ET (34), dont les premières sorties représentent respectivement une entrée de l'étage de simulation, en ce que leurs deuxièmes entrées sont reliées respectivement à la première entrée de l'autre de ces deux portes (34, 33), et en ce que les sorties de la première porte NON ET (33) et de la deuxième porte ET (34) sont reliées respectivement à l'entrée S et à l'entrée R d'un multivibrateur RS (35) formant l'étage de sortie (8) et dont une sortie représente la sortie du premier étage de sortie (8), les entrées R et S étant reliées aux entrées du détecteur (12).

10. Dispositif pour la mise en oeuvre du procédé selon la revendication 3, dans lequel il est prévu un étage de simulation (7) qui simule, en liaison avec un étage de sortie (8) monté en aval et simulant la fonction d'un multivibrateur RS, un circuit logique affecté d'un défaut d'interruption, caractérisé en ce que l'attaque de l'étage de sortie est effectuée de telle sorte par l'intermédiaire de deux sorties (9, 11) de l'étage de simulation (7), qu'un signal qui apparaît à l'une (9) des sorties de l'étage de simulation (7) et qui n'est pas influencé par le défaut d'interruption, est envoyé à la sortie (10) du premier étage de sortie (8), et que, à l'apparition, à l'une (9) des sorties de l'étage de simulation (7), d'un signal influencé par le défaut d'interruption, le passage du signal se produisant directement avant celui-ci, à l'une (9) des sorties de l'étage de simulation (7) est maintenu, en ce qu'il est prévu un détecteur (12) qui est relié aux deux sorties (9, 11) de l'étage de simulation (7) et qui délivre, à l'apparition, à l'une (9) des deux sorties (9, 11) de l'étage de simulation (7), d'une occupation de signal significative pour le défaut d'interruption, un signal de sortie qui est envoyé à l'entrée d'un multivibrateur D (36) soumis aux impulsions d'horloge par une entrée d'horloge (38), et en ce que l'entrée et la sortie du multivibrateur D (36) sont reliées aux deux entrées d'une deuxième porte NON ET (37) dont la sortie est reliée à l'entrée de commande d'un multiplexeur (18), dont la première entrée est reliée à la sortie (10) de l'étage de sortie (8), dont la deuxième entrée est reliée à une sortie d'un simulateur sans défaut du circuit logique qui est commandé en commun avec l'étage de simulation (7), et dont la sortie représente la sortie du modèle de simulation comportant le défaut.

11. Dispositif pour la mise en oeuvre du procédé selon la revendication 3, dans lequel il est prévu un étage de simulation (20') sans défaut qui simule la fonction du circuit logique à tester et auquel est relié en aval un deuxième étage de sortie (22) ayant une entrée de données et une entrée de commande, du type dans lequel l'entrée de données du deuxième étage de sortie (22) est reliée à la sortie (21) de l'étage de simulation (20') sans défaut, et dans lequel il est prévu un circuit de commande ou d'attaque (23) qui est commandé en parallèle avec l'étage de simulation (20') sans défaut, qui est conçu pour le défaut d'interruption à simuler, et dont la sortie est reliée à l'entrée de commande du deuxième étage de sortie (22), caractérisé en ce que le circuit de commande (23) délivre, à l'apparition, aux entrées de l'étage de simulation (20'), d'une occupation de signal qui n'est pas à influencer par le défaut d'interruption, un premier signal de sortie (24, "1") qui est susceptible de relier la sortie de l'étage de simulation (20') sans défaut à la sortie (10') du deuxième étage de sortie (22), alors que ce circuit de commande délivre, à l'apparition, aux entrées de l'étage de simulation (20'), d'une occupation de signal qui est à influencer par le défaut d'interruption, un deuxième signal de sortie (24, "0") qui permet de maintenir, à la sortie (10') du deuxième étage de sortie (22), le passage du signal se produisant directement avant l'application de cette occupation de signal précédemment citée à la sortie (21) de l'étage de simulation (20') sans défaut, en ce que les signaux de sortie du circuit de commande (23) sont envoyés à l'entrée d'un multivibrateur D (36) soumis aux impulsions d'horloge par une entrée d'horloge (38), en ce que l'entrée et la sortie du multivibrateur D (36) sont reliées aux deux entrées d'une deuxième porte NON ET (37), dont la sortie est reliée à l'entrée de commande d'un multiplexeur (18) dont la première entrée est reliée à la sortie (10') du deuxième étage de sortie (22), dont la deuxième entrée est reliée à la sortie (21) de l'étage de simulation (20') sans défaut du circuit logique et dont la sortie représente la sortie du modèle de simulation comportant le défaut.
